(19) **Europäisches Patentamt / European Patent Office / Office européen des brevets**

(11) **EP 4 647 906 A1**

(12) **EUROPEAN PATENT APPLICATION**
published in accordance with Art. 153(4) EPC

(43) Date of publication:
**12.11.2025 Bulletin 2025/46**

(21) Application number: **23917196.0**

(22) Date of filing: **22.11.2023**

(51) International Patent Classification (IPC):
**G06F 9/455** (2018.01)

(52) Cooperative Patent Classification (CPC):
**G06F 9/455**

(86) International application number:
**PCT/CN2023/133239**

(87) International publication number:
**WO 2024/152728 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.01.2023 CN 202310078920**

(71) Applicant: **Huawei Technologies Co., Ltd.**
**Shenzhen, Guangdong 518129 (CN)**

(72) Inventors:
• **YANG, Jiaqi**
**Shenzhen, Guangdong 518129 (CN)**

• **WU, Jing**
**Shenzhen, Guangdong 518129 (CN)**
• **JING, Rui**
**Shenzhen, Guangdong 518129 (CN)**
• **CAI, Haomin**
**Shenzhen, Guangdong 518129 (CN)**
• **LEI, Zhongkai**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **CONTAINER RESOURCE ADJUSTMENT METHOD AND ELECTRONIC DEVICE**

(57) This application provides a container resource adjustment method and an electronic device. The method includes: obtaining first information of a node, where the first information indicates current load of a first resource of the node, and a plurality of containers are configured for the node; obtaining second information of a first container in the plurality of containers, where the second information indicates usage of the first resource by the first container in a first time period; and adjusting a quota of a first resource of the first container based on the first information and the second information. Based on this solution, a resource quota of a container can be properly adjusted, to ensure stable and healthy running of a service.

900

S910: Obtain first information of a node, where the first information indicates current load of a first resource of the node

S920: Obtain second information of a first container in a plurality of containers

S930: Adjust a quota of a first resource of the first container based on the first information and the second information

FIG. 9

**Description**

This application claims priority to Chinese Patent Application No. 202310078920.4, filed with the China National Intellectual Property Administration on January 16, 2023 and entitled "CONTAINER RESOURCE ADJUSTMENT METHOD AND ELECTRONIC DEVICE", which is incorporated herein by reference in its entirety.

**TECHNICAL FIELD**

This application relates to the field of electronic devices, and more specifically, to a container resource adjustment method and an electronic device.

**BACKGROUND**

A container is a lightweight, portable, and self-contained software packing technology. The container can enable an application to run in a same way almost anywhere. Different from a conventional virtualization technology, the container runs in specific user space of an operating system and is isolated from other processes of the operating system. Therefore, a volume of the container is much smaller than that of a virtual machine. Starting the container does not require the entire operating system to be started. Therefore, a deployment and startup speed of the container is faster, overheads are lower, and migration is easier.

When the container runs a service, a requirement for a resource varies in different time periods. An excessively large or excessively small resource quota may significantly waste a resource of a node. In addition, during a peak hour of a service requirement, the container may be affected by flow control. Consequently, quality of service degrades.

Therefore, how to properly adjust an available resource of the container to ensure stable and healthy running of the service is an urgent problem to be resolved currently.

**SUMMARY**

Embodiments of this application provide a container resource adjustment method and an electronic device, to help properly adjust an available resource of a container, thereby ensuring stable and healthy running of a service.

According to a first aspect, a container resource adjustment method is provided. The method includes: obtaining first information of a node, where the first information indicates current load of a first resource of the node, and a plurality of containers are configured for the node; obtaining second information of a first container in the plurality of containers, where the second information indicates usage of the first resource by the first container in a first time period; and adjusting a quota of a first resource of the first container based on the first information and the second information.

It should be noted that the plurality of containers may run on the node, and the first container is any container on the node. The first resource may be a CPU resource, a network bandwidth resource, or the like. The quota of the first resource of the first container is the first resource that can be used by the first container, or may be understood as a quota of the first resource allocated by the node to the first container.

In this embodiment of this application, the quota of the first resource of the first container can be properly allocated with reference to the load of the first resource of the node and the usage of the first resource by the first container, thereby ensuring stable and healthy running of a service. If only the load of the first resource of the node is considered for adjustment of the quota of the first resource of the first container, the first resource may be unevenly allocated. If only the usage of the first resource by the first container is considered, the first resource allocated to the first container may be excessive, causing the load of the node to be excessively heavy or leaving fewer first resources available for the first container.

With reference to the first aspect, in a possible implementation, a type of the first container is determined based on the second information; and the quota of the first resource of the first container is adjusted based on the first information, the second information, and the type of the first container.

In this embodiment of this application, the type of the first container may be determined based on the usage of the first resource by the first container. During adjustment of the available first resource of the container, determining may be performed based on the type of the first container, so that the quota of the first resource of the first container is properly adjusted, thereby ensuring stable and healthy running of a service corresponding to the first container.

With reference to the first aspect, in a possible implementation, the second information includes a current quota, an initial quota, and throttling information of the first container. The current quota is a current quota of the first resource of the first container. The initial quota is a preset or default quota of the first resource of the first container. The throttling information indicates whether the first container is restricted to using the first resource in the first time period. That a type of the first container is determined based on the second information includes: if the first container is restricted to using the first resource in the first time period, the first container belongs to a first-type container; and if the current quota is greater than the initial quota, the first container belongs to a second-type container.

It should be noted that the plurality of containers on the node may be classified into two types. The first-type container is a container that is restricted to using the first resource in the first time period. The second-type container is a container for which the quota has been increased. The first container may belong to both the first-type container and the second-type container, or may belong only to the first-type container, or may belong only to the second-type container.

It should be noted that there is another-type container in this embodiment of this application. For example, the first container belongs to the second-type container, and the first container is not restricted to using the first resource in the first time period. For another example, the first container is not restricted to using the first resource, and the quota is not increased. That is, the first container may not belong to the first-type container, and may not belong to the second-type container.

With reference to the first aspect, in a possible implementation, that the quota of the first resource of the first container is adjusted based on the first information, the second information, and the type of the first container includes: when load of the first resource is less than a first threshold, and the first container belongs to the first-type container, increasing the quota of the first resource of the first container based on the second information; and when the load of the first resource is greater than or equal to the first threshold, and the first container belongs to the second-type container, decreasing the quota of the first resource of the first container based on the second information.

In this embodiment of this application, when the load of the first resource is less than the first threshold, the quota of the first resource of the first-type container may be increased, thereby improving quality of service of a service corresponding to the first-type container, and helping ensure stable and healthy running of the service corresponding to the first-type container. When the load of the first resource is greater than or equal to the first threshold, the quota of the first resource of the second-type container may be decreased, to prevent the load of the node from being excessively heavy, and help ensure stable and healthy running of all services on the node.

With reference to the first aspect, in a possible implementation, the throttling information includes duration in which and a quantity of times that the first container is restricted to using the first resource in the first time period. An increase value of the quota of the first resource of the first container is related to a ratio of the duration to the quantity of times.

In this embodiment of this application, when it is determined to increase the quota of the first resource of the first container, the increase value of the quota of the first resource of the first container is related to a degree to which the first container is restricted to using the first resource. Therefore, it can be ensured that after the quota of the first resource of the first container is increased, the first resource of the first container can support stable running of the service of the first container, thereby helping improve quality of service of the service corresponding to the first container.

With reference to the first aspect, in a possible implementation, a decrease value of the quota of the first resource of the first container is related to a difference between the current quota and the initial quota.

In this embodiment of this application, when it is determined to decrease the quota of the first resource of the first container, the decrease value of the quota of the first resource of the first container is related to the increased quota of the first resource of the first container. Therefore, it can be ensured that after the quota of the first resource of the first container is decreased, the load of the node can be effectively decreased, thereby ensuring that all containers on the node run stably and healthily, and helping improve quality of service of services corresponding to the containers.

With reference to the first aspect, in a possible implementation, when the load of the first resource is less than the first threshold, and the first container belongs to the first-type container, there is one or more first containers. A sum of an increase value of a quota of a first resource of the one or more first containers is less than or equal to a second threshold. A sum of the second threshold and the load of the first resource is less than or equal to the first threshold.

In this embodiment of this application, there may be a plurality of first-type containers, and a sum of increase values of all first-type containers is limited to being less than or equal to the second threshold. This can prevent the load of the node from being excessively heavy, and help ensure stable and healthy running of all services on the node.

With reference to the first aspect, in a possible implementation, the quota of the first resource of the first container is greater than or equal to the initial quota.

In this embodiment of this application, the quota of the first resource of the first container may be limited to being greater than or equal to the initial quota of the first container, to ensure that the service of the first container has a sufficient first resource available, thereby improving quality of service of the service.

With reference to the first aspect, in a possible implementation, the quota of the first resource of the first container is less than or equal to a first preset value. The first preset value is greater than or equal to the initial quota.

In this embodiment of this application, the quota of the first resource of the first container may be limited to not exceeding the first preset value, to avoid an unlimited increase of the quota of the first resource of the first container, thereby ensuring that the load of node is not excessively heavy, and ensuring stable and healthy running of the service.

With reference to the first aspect, in a possible implementation, when a remaining available quota of the first resource of the first container is less than a third threshold, the quota of the first resource of the first container is less than or equal to a second preset value. The second preset value is less than or equal to the first preset value.

The remaining available quota of the first resource of the first container meets:

$$remain = limit \times (N+1) \times T - used$$

"remain" represents the remaining available quota of the first resource. "limit" represents the initial quota. N represents any positive integer. T represents duration of the first time period. "used" represents an amount of the first resource used by the first container in N first time periods.

In this embodiment of this application, when the remaining available quota of the first resource of the first container is less than the third threshold, the quota of the first resource of the first container may be limited to not exceeding the second preset value, to ensure stable and healthy running of the service of the first container.

With reference to the first aspect, in a possible implementation, the second preset value is related to the remaining quota of the first resource, the third threshold, the initial quota, and the first preset value.

With reference to the first aspect, in a possible implementation, the first preset value is related to the load of the first resource.

According to a second aspect, an electronic device is provided. The electronic device includes:

one or more processors; and
one or more memories.

The one or more memories store one or more computer programs. The one or more computer programs include instructions. When the instructions are executed by the one or more processors, the electronic device is enabled to perform the following steps: obtaining first information of a node, where the first information indicates current load of a first resource of the node, and a plurality of containers are configured for the node; obtaining second information of a first container in the plurality of containers, where the second information indicates usage of the first resource by the first container in a first time period; and adjusting a quota of a first resource of the first container based on the first information and the second information.

It should be understood that, in the second aspect or any possible implementation of the second aspect, for beneficial effects corresponding to apparatuses, refer to beneficial effects described in the foregoing method. Details are not described herein again.

With reference to the second aspect, in a possible implementation, when the instructions are executed by the one or more processors, the electronic device is enabled to perform the following steps: determining a type of the first container based on the second information; and adjusting the quota of the first resource of the first container based on the first information, the second information, and the type of the first container.

With reference to the second aspect, in a possible implementation, the second information includes a current quota, an initial quota, and throttling information of the first container. The current quota is a current quota of the first resource of the first container. The initial quota is a preset or default quota of the first resource of the first container. The throttling information indicates whether the first container is restricted to using the first resource in the first time period.

When the instructions are executed by the one or more processors, the electronic device is enabled to perform the following steps:

if the first container is restricted to using the first resource in the first time period, determining that the first container belongs to a first-type container; and
if the current quota is greater than the initial quota, determining that the first container belongs to a second-type container.

With reference to the second aspect, in a possible implementation, when load of the first resource is less than a first threshold, and the first container belongs to the first-type container, increase the quota of the first resource of the first container based on the second information; and when the load of the first resource is greater than or equal to the first threshold, and the first container belongs to the second-type container, decrease the quota of the first resource of the first container based on the second information.

With reference to the second aspect, in a possible implementation, the throttling information includes duration in which and a quantity of times that the first container is restricted to using the first resource in the first time period. An increase value of the quota of the first resource of the first container is related to a ratio of the duration to the quantity of times.

With reference to the second aspect, in a possible implementation, a decrease value of the quota of the first resource of the first container is related to a difference between the current quota and the initial quota.

With reference to the second aspect, in a possible implementation, when the load of the first resource is less than the first threshold, and the first container belongs to the first-type container, there is one or more first containers. A sum of an increase value of a quota of a first resource of the one or more first containers is less than or equal to a second threshold. A sum of the second threshold and the load of the first resource is less than or equal to the first threshold.

With reference to the second aspect, in a possible implementation, the quota of the first resource of the first container is greater than or equal to the initial quota.

With reference to the second aspect, in a possible implementation, the quota of the first resource of the first container is less than or equal to a first preset value. The first preset value is greater than or equal to the initial quota.

With reference to the second aspect, in a possible implementation, when a remaining available quota of the first resource of the first container is less than a third threshold, the quota of the first resource of the first container is less than or equal to a second preset value. The second preset value is less than or equal to the first preset value. The remaining available quota of the first resource of the first container meets:

$$remain = limit \times (N+1) \times T - used$$

"remain" represents the remaining available quota of the first resource. "limit" represents the initial quota. N represents any positive integer. T represents duration of the first time period. "used" represents an amount of the first resource used by the first container in N first time periods.

With reference to the second aspect, in a possible implementation, the second preset value is related to the remaining quota of the first resource, the third threshold, the initial quota, and the first preset value.

With reference to the second aspect, in a possible implementation, the first preset value is related to the load of the first resource.

According to a third aspect, a chip is provided. This chip includes a processor and a communication interface. The communication interface is configured to: receive a signal, and transmit the signal to the processor. The processor processes the signal, so that the method in any possible implementation of the first aspect is performed.

According to a fourth aspect, a computer-readable storage medium is provided. The computer-readable storage medium includes computer instructions. When the computer instructions are run on an electronic device, the electronic device is enabled to perform the method in any possible implementation of the first aspect.

According to a fifth aspect, a computer program product is provided. The computer program product includes computer program code. When the computer program code is run, the method in any possible implementation of the first aspect is implemented.

## BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of an architecture of a container cluster according to an embodiment of this application;
FIG. 4 is a schematic flowchart of a container resource adjustment method according to an embodiment of this application;
FIG. 5 is a diagram of a container resource adjustment method according to an embodiment of this application;
FIG. 6 is a schematic flowchart of a container resource adjustment method according to an embodiment of this application;
FIG. 7 is a diagram of an application scenario to which an embodiment of this application is applicable;
FIG. 8 is a diagram of data synchronization in an allowlist mechanism according to an embodiment of this application;
FIG. 9 is a schematic flowchart of a container resource adjustment method according to an embodiment of this application; and
FIG. 10 is a diagram of a hardware structure of an apparatus according to an embodiment of this application.

## DESCRIPTION OF EMBODIMENTS

Terms used in the following embodiments are only intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

The following describes the electronic device and embodiments for using such an electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of the portable electronic device includes but is not limited to a portable electronic device using iOS®, Android®, Microsoft®, or another operating system. The portable electronic device may alternatively be another portable electronic device, like a laptop (Laptop). It should be further understood that, in some other embodiments, the foregoing electronic device may not be the portable electronic device but a desktop computer.

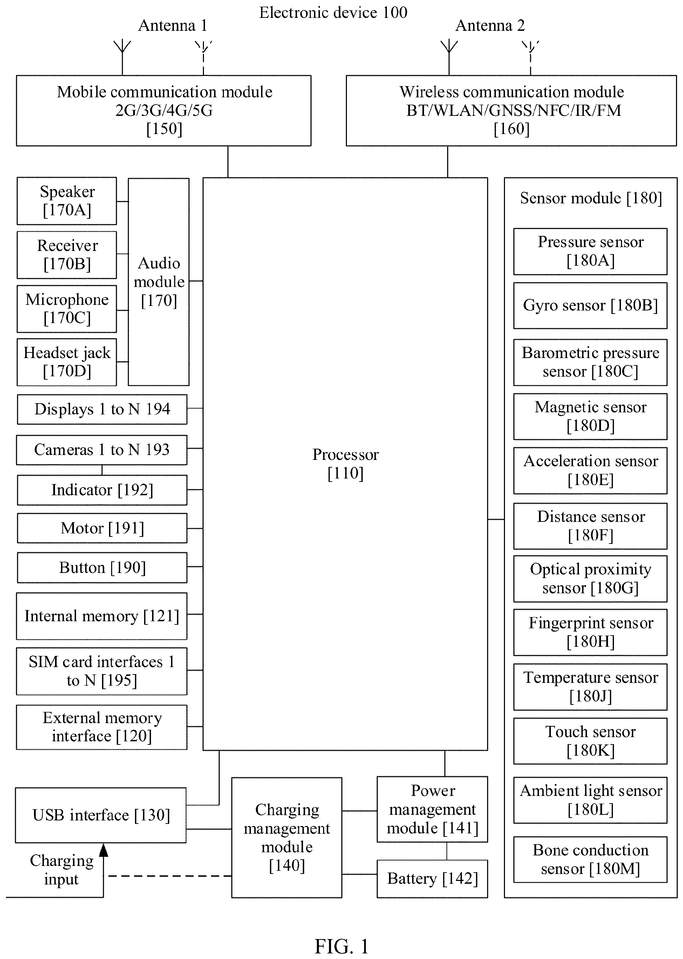

For example, FIG. 1 is a diagram of a structure of an electronic device 100 according to an embodiment of this application. For example, as shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or data again, the instructions or data may be directly invoked from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL).

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be configured to perform audio communication, and sample, quantize, and code an analog signal. In some embodiments, the audio module 170 may be coupled to the wireless communication module 160 through a PCM bus interface.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160.

The MIPI interface may be configured to connect the processor 110 to a peripheral device such as the display 194 or the camera 193. The GPIO interface may be configured by software.

The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device.

It may be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a solution that includes wireless communication such as 2G/3G/4G/5G and that is applied to the electronic device 100.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), or may be a display panel made of a material like an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, or a quantum dot light-emitting diode (quantum dot light-emitting diode, QLED), or the like. In some embodiments, the electronic device 100 may include one or N displays 194, where N is a positive integer greater than 1. In some embodiments, the display 194 may further integrate a touch function, and may also be referred to as a touchscreen.

The electronic device 100 may implement a photographing function through the ISP, the camera 193, the video codec, the GPU, the display 194, the application processor, and the like.

The external memory interface 120 may be configured to connect to an external storage card, for example, a microSD card, to extend a storage capability of the electronic device 100.

The internal memory 121 may be configured to store computer-executable program code. The executable program code includes instructions. The processor 110 runs the instructions stored in the internal memory 121, to perform various function applications of the electronic device 100 and data processing.

The electronic device 100 may implement an audio function such as music play and recording through the audio module 170, the speaker 170A, the receiver 170B, the microphone 170C, the headset jack 170D, the application processor, and the like.

The audio module 170 is configured to convert digital audio information into an analog audio signal for outputting, and is further configured to convert an analog audio input into a digital audio signal. The speaker 170A, also referred to as a "loudspeaker", is configured to convert an electrical audio signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. The gyro sensor 180B may be configured to determine a motion posture of the electronic device 100. The barometric pressure sensor 180C is configured to measure barometric pressure. In some embodiments, the electronic device 100 calculates an altitude through the barometric pressure measured by the barometric pressure sensor 180C, to assist in positioning and navigation. The acceleration sensor 180E may detect accelerations in various directions (usually on three axes) of the electronic device 100. The distance sensor 180F is configured to measure a distance. The fingerprint sensor 180H is configured to collect a fingerprint. The touch sensor 180K is also referred to as a "touch panel". The touch sensor 180K may be disposed on the display 194, and the touch sensor 180K and the display 194 constitute a touchscreen, which is also referred to as a "touch control screen". The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

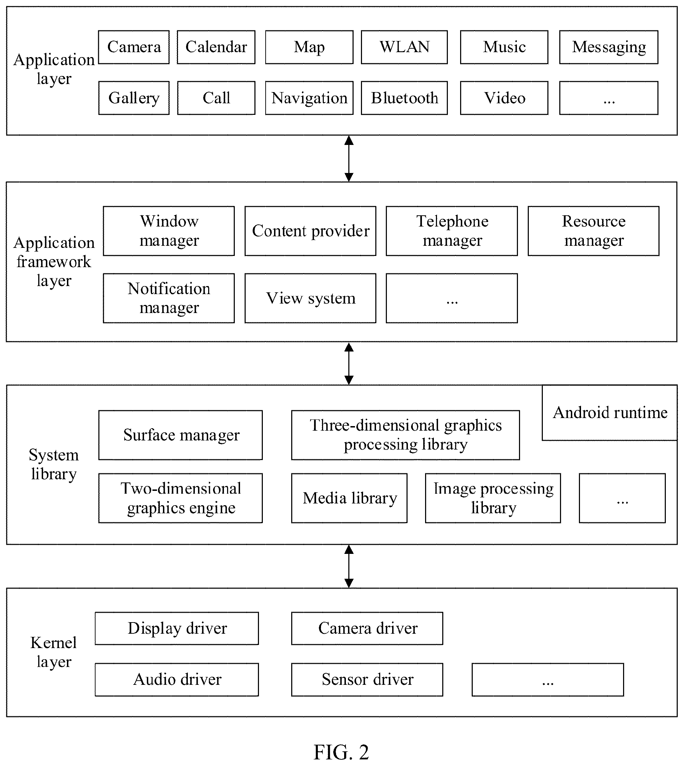

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers from top to bottom: an application layer, an application framework layer, an Android runtime (Android runtime) and system library, and a kernel layer. The application layer may include a series of application packages.

As shown in FIG. 2, an application package may include applications such as Camera, Gallery, Calendar, Call, Map, Navigation, WLAN, Bluetooth, Music, Video, Messaging, app 1, app 2, and the like.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a telephone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and received, a browsing history and bookmarks, an address book, and the like.

The view system includes visual controls such as a control for displaying a text and a control for displaying an image. The view system may be configured to construct an application. A display interface may include one or more views. For example, a display interface including an SMS notification icon may include a view for displaying text and a view for displaying an image.

The telephone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message that may automatically disappear after a short pause without requiring user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a performance function that needs to be invoked in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer may include a display driver, a camera driver, an audio driver, and a sensor driver.

It should be understood that the electronic device in this embodiment of this application may also be an electronic device on which an operating system such as Windows, Linux, Android, HarmonyOS, or an Apple operating system is installed.

For ease of understanding, the following first explains and describes technical terms in this application.

Kubernetes: Kubernetes is a portable and extensible open-source platform for automatic operation and maintenance of a Linux container, and is widely used for managing containerized workloads and services. Using Kubernetes to build a container cluster allows for hybrid deployment of different types of service containers on a plurality of groups of hosts.

Container (container): A container is a process or a group of processes separated from other parts of a system. Isolating the processes and controlling an amount of a CPU resource, an amount of a memory resource, and an amount of a disk resource that these processes can access allow a plurality of applications to share an operating system.

Pod (Pod): A pod is a set of one or more containers. Containers in the pod can share storage, have a unique IP address, and can communicate with each other. In addition, the pod is a smallest deployable unit.

Application programming interface server (application programming interface server, API server): As a core of a cluster, an application programming interface server is responsible for communication between functional modules in the cluster and allows a user to obtain information about each node in the cluster through the API server.

Control group (control group, Cgroup): A cgroup is a mechanism provided by a Linux kernel to limit a resource used by a single process or a plurality of processes, and can implement refined control on a resource such as a CPU resource and a memory resource. The cgroup provides many functions and may limit a quantity of available resources for a container. For example, a user is supported to set an upper limit of a memory resource used by the container during container running, and collecting statistics on an amount of a resource used by the container is also supported.

Compressible resource and non-compressible resource: Resources are classified into compressible resources and non-compressible resources based on how a service behaves when the resources are insufficient. The compressible resource may include a resource such as a CPU resource or a network bandwidth resource. The non-compressible resource may include a resource such as a memory resource. Usually, if the non-compressible resource allocated to the service is insufficient, a pod corresponding to the service may be ended, and a service process is killed. If the compressible resource allocated to the service is insufficient, the pod corresponding to the service may not be ended, but service freezing may be caused, and quality of service of the service degrades.

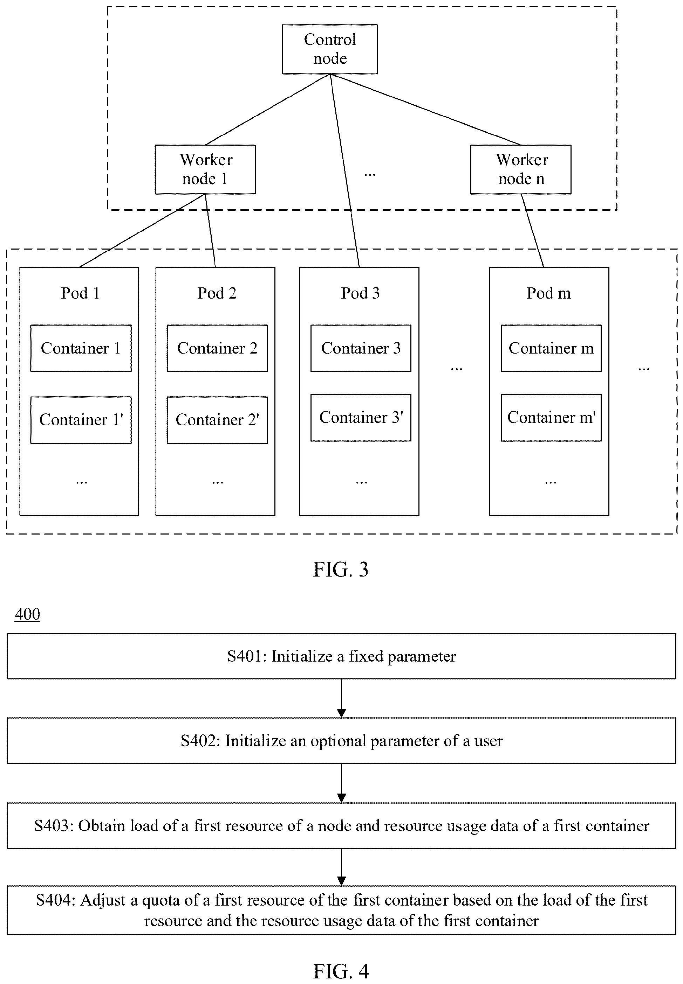

The following describes an architecture of a Kubernetes-based container cluster with reference to FIG. 3. As shown in FIG. 3, the Kubernetes-based container cluster is a distributed container management system. A core idea of the Kubernetes-based container cluster is that "everything is service-centric and runs around services". A containerized application created on Kubernetes by following the idea can run on a physical machine, a virtual machine, or an enterprise private cloud, and can also be hosted on a public cloud. Kubernetes also features automation, self-scaling up/down, self-diagnosis, and easy upgrade. Based on Docker technologies, Kubernetes provides a series of complete functions such as deployment and running, resource scheduling, service discovery, and dynamic scaling for the containerized applications.

As shown in FIG. 3, a container cluster may include a control (Master) node and a group of worker nodes (Node). The master node is a cluster control node on which a group of cluster management-related processes run, and is responsible for management and control of the entire cluster, to implement a management plane of a container. The node is a service node, on which a pod (Pod) runs, in the container cluster, and is a host machine (for example, the virtual machine or the physical machine) on which the pod runs. The pod (Pod) may include one container or a plurality of related containers. The pod is a smallest unit that can be created, scheduled, and managed in the Kubernetes-based container cluster. The containers included in the pod run on a same host machine, and use a same network namespace (namespace) and a same internet protocol (internet protocol, IP) address. The pod provides higher-level abstract than the container, so that deployment and management are more flexible.

Refer to FIG. 3. The container cluster may include n worker nodes, and there may be a communication connection between the n worker nodes. The communication connection may be understood as a wireless connection or a wired connection for information exchange. This is not limited in this embodiment of this application. The wireless connection may be understood as that the node communicates with another node without a bus, for example, the communication may be performed through Bluetooth or Wi-Fi. The wired connection may be understood as that the node communicates with another node based on a bus. For example, a controller area network (Controller Area Network, CAN) bus, a local interconnect network (Local Interconnect Network, LIN) bus, or an Ethernet (ethernet) communication technology may be used.

To run different types of services, a plurality of containers may be run on one worker node. These containers share resources such as a CPU resource, a network bandwidth resource, a memory resource, and a disk resource of a same worker node. If available resources of the containers are not limited, the containers affect each other, and the resource of the node may be exhausted, which finally causes quality of service of the services to degrade.

However, resources on which the services depend change during running. For example: (1) The services have peaks and troughs over time or when a specific event occurs. (2) The services have regular or random burst traffic in different running phases, for example, extra traffic generated by periodic garbage collection. If a plurality of large-scale service applications run on a node with a limited resource, competition for the resource by a plurality of services on a same node may become intense, and even the node may stop working due to exhaustion of the resource such as a memory resource or a CPU resource.

Therefore, how to properly allocate an available resource of each container to avoid quality of service degradation occurred because an available resource of the service is insufficient and avoid resource waste is an urgent problem that needs to be urgently resolved currently.

The following describes a container resource adjustment method provided in an embodiment of this application with reference to the accompanying drawings.

FIG. 4 shows a container resource adjustment method 400 according to an embodiment of this application. The method 400 includes the following steps.

S401: Initialize a fixed parameter.

When a container runs, the fixed parameter required for running the container needs to be initialized, for example, a fixed parameter related to a node or a container cluster, such as an API server address of the container cluster or a name of the node.

S402: Initialize an optional parameter of a user.

In this embodiment of this application, the user may set the optional parameter, for example, a parameter such as a type of a resource (for example, a CPU resource or a network resource) that needs to be adjusted and an initial quota of the container.

S403: Obtain current load of a first resource of the node and resource usage data of a first container.

It should be noted that the node may be any node of the n worker nodes in the embodiment shown in FIG. 3. The first resource of the node is a compressible resource, for example, may be a CPU resource or a network (bandwidth) resource. A plurality of containers may be configured for the node to run different services, and the first container is any container in the plurality of containers. Each container in the plurality of containers may use a part of the first resource of the node, to ensure normal running of the services.

It should be noted that the current load of the first resource is usage of the first resource of the node at a current moment. For example, when the first resource is a CPU resource, at the current moment, CPU resource utilization (or CPU load) of the node is 70%. The current moment is a moment at which a quota of the first resource of the first container is adjusted, and is usually a moment at which a previous sampling cycle ends.

It should be noted that the resource usage data of the first container is data about usage of the first resource by the first container in the previous sampling cycle. The resource usage data may include a current quota, an initial quota, throttling information, and the like of the first container. The current quota is a quota of the first resource of the first container at the current moment. The initial quota is a preset or default quota of the first resource of the first container. The throttling information is that the first container is restricted to using the first resource in the previous sampling cycle.

It should be understood that the quota of the first resource of the first container is an available first resource of the first container in a unit time. An example in which the first resource is a CPU resource is used. The quota of the first resource of the first container may be two-second duration of using a CPU every one second. Alternatively, in this embodiment of this application, the CPU is a multi-core processor, and the quota of the first resource of the first container is that the first container may use two cores of the CPU to run the service every one second. An example in which the first resource is a network resource is used. The quota of the first resource of the first container may be that the first container may use traffic of 1000 MB every one second.

In a possible implementation, data of the resource used during running of the first container and the load of the first resource of the node are obtained in real time. In another possible implementation, the resource usage data of the first container and the load of the first resource of the node are obtained after each sampling cycle.

In some embodiments, the user may independently select a moment to adjust the quota of the first resource of the first container. When determining that the quota of the first resource of the first container needs to be adjusted, the user obtains the load of the first resource and the resource usage data of the first container in the previous sampling cycle.

Optionally, duration of the sampling cycle may be preset or default, for example, may be set by the user in S402.

S404: Adjust the quota of the first resource of the first container based on the load of the first resource of the node and the resource usage data of the first container.

In this embodiment of this application, resource quota adjustment policies for different types of containers vary with resource load of the node.

In a possible implementation, when the load of the first resource of the node is less than a first threshold, quotas of first resources of some containers are appropriately increased. When the load of the first resource of the node is greater than or equal to the first threshold, the quotas of the first resources of some containers are appropriately decreased.

Specifically, a type of the first container is first determined based on the resource usage data of the first container. A first-type container is a container that is restricted to using the first resource in the previous sampling cycle. A second-type container is a container whose current quota is greater than the initial quota. If the first container belongs to the first-type container, when the load of the first resource of the node is less than the first threshold, the quota of the first resource of the first container is increased. If the first container belongs to the second-type container, when the load of the first resource of the node is greater than or equal to the first threshold, the quota of the first resource of the first container is decreased.

Optionally, the first threshold may be preset or default. For example, the first threshold may be set by the user in S402.

In this embodiment of this application, the throttling information may indicate that the first container is restricted to using the first resource in the previous sampling cycle, or indicate a degree to which the first container is restricted to using the first resource in the previous sampling cycle, or indicate whether the first container is restricted to using the first resource in the previous sampling cycle.

It should be noted that if the first container is restricted to using the first resource in the previous sampling cycle, it indicates that the amount of the resource used by the first container in the previous sampling cycle reaches a limit of the current quota.

An example in which the first resource is a CPU resource is used. Two parameters nr_throttled and throttled_time are read from a file cpu.stat in cgroup files of the first container. nr_throttled records a quantity of times that the first container has been restricted to using the CPU resource since startup of the first container. throttled_time records duration in which the first container has been restricted to using the CPU resource since startup of the first container. A difference between values of nr_throttled at an interval of one sampling cycle is calculated, to obtain the quantity of times $\partial_i$ that the first container is restricted to using the CPU resource in a previous sampling cycle. A difference between values of throttled_time at an interval of one sampling cycle is calculated, to obtain the duration $\theta_i$ in which the first container is restricted to using the CPU resource in the previous sampling cycle. The throttling information may include the quantity of times $\partial_i$ that use of the CPU resource is restricted and the duration $\theta_i$ in which use of the CPU resource is restricted.

It should be understood that if the quantity of times $\partial_i$ that use of the CPU resource is restricted and the duration $\theta_i$ in which use of the CPU resource is restricted are zero, it indicates that the container is not restricted to using the CPU resource in the previous sampling cycle, and it also indicates that the current quota of the container is sufficient to support running of the container.

In some embodiments, if the first container belongs to the first-type container, when the load of the first resource of the node is less than the first threshold, an increase value of the quota of the first resource of the first container is related to a case in which or the degree to which the first container is restricted to using the first resource in the previous sampling cycle. Optionally, a larger degree to which the first container is restricted to using the first resource in the previous sampling cycle indicates a larger increase value.

In some embodiments, the increase value of the quota of the first resource of the first container is related to a ratio $\theta_i/\partial_i$ of the duration $\theta_i$ in which use of the CPU resource is restricted to the quantity of times $\partial_i$ that use of the CPU resource is restricted. A larger ratio indicates a larger increase value. Alternatively, the increase value of the quota of the first resource of the first container may be related to the duration $\theta_i$ in which use of the CPU resource is restricted or the quantity of times $\partial_i$ that use of the CPU resource is restricted.

In some embodiments, if the first container belongs to the second-type container, when the load of the first resource is greater than or equal to the first threshold, a decrease value of the quota of the first resource of the first container is related to the increased quota of the first container, that is, is related to a difference between the current quota and the initial quota. Optionally, a larger increased quota indicates a larger decrease value.

It should be understood that for each container on the node, the increase value or the decrease value of the container is related to the resource usage data of the container.

It should be noted that the first container may belong to both the first-type container and the second-type container, or may belong only to the first-type container, or may belong only to the second-type container. When the first container may belong to both the first-type container and the second-type container, if the load of the first resource is greater than or equal to the first threshold, the quota of the first resource of the first container is decreased. If the load of the first resource is less than the first threshold, the quota of the first resource of the first container is increased.

The following describes, by using an algorithm, a process of adjusting the quota of the first resource of the container on the node. It is assumed that there are M containers on the node. All containers on the node are traversed by using the following algorithm.

$$\text{For } i = 1 \text{ to } N \text{ do}$$

$$\text{If } C(E, U) \text{ do}$$

$$\text{delta}_i = \text{quota}_i - \text{limit}_i$$

$$\text{Else}$$

$$\text{delta}_i = T\left(\text{throttled}_i\right)$$

$$\text{End if}$$

$$\text{Delta}_i \pm = \text{delta}_i \times H\left(E, U, \sigma, \sum \text{delta}_i\right)$$

$$\text{End for}$$

$i$ is less than or equal to M. $\text{delta}_i$ represents a reference of a quota adjustment value of a container $i$. $\text{quota}_i$ represents a current quota of the container $i$. $\text{limit}_i$ represents an initial quota of the container $i$. T (throttled$_i$) represents throttling information of the container $i$.

$\text{Delta}_i$ represents a quota adjustment value, of the container $i$, obtained after the reference is corrected.

C(E, U) may be used to compare a value of the current load U of the first resource with that of the first threshold E. When U is greater than or equal to E, it indicates that quotas of first resources of some containers need to be decreased, and the increased resource quota of the container $i$ is used as the reference. If U is less than E, it indicates that the quotas of the first resources of some containers need to be increased, and the throttling information T (throttled) of the container $i$ is used as the reference.

It should be understood that when the load U of the first resource is greater than or equal to the first threshold E, and an increased quota of the container $i$ is zero, a quota of a first resource of the container $i$ is not adjusted.

In some embodiments, a difference between resource tension degrees under different load conditions is considered, and the correction coefficient H(E, U, $\sigma$, $\sum$ delta$_i$) is added based on the reference delta$_i$ . Correction is

performed jointly by using the first threshold E, the load U of the first resource, a penalty factor $\sigma$, and a sum $\sum \text{delta}_i$ of $\text{delta}_i$ of all containers.

Optionally, the correction coefficient may also be a preset or default fixed value.

Optionally, in this embodiment, the quota of the first resource of the container i may also be directly increased or decreased based on $\text{delta}_i$, and $\text{delta}_i$ is not corrected.

It should be understood that the quota of the first resource of the container i may be calculated based on the current quota of the container i and $\text{Delta}_i$. That is, the current quota of the container i is increased by or decreased by $\text{Delta}_i$, to obtain the quota of the first resource of the container i.

It should be noted that an initial value of $\text{Delta}_i$ may be zero. A symbol "$\pm=$" in the foregoing algorithm represents that addition or subtraction calculation is performed on $\text{Delta}_i$ based on an original basis. For example, A+=B represents A=A+B or A=A-B.

In some embodiments, when the load of the first resource is less than the first threshold, the quota of the first resource of a plurality of containers may be increased, and a sum of increase values of quotas of first resources of the plurality of containers is less than or equal to a second threshold, to prevent the load of the first resource of the node from being excessively heavy. The second threshold may be preset or default.

Optionally, a sum of the second threshold and the load of the first resource of the current node is less than or equal to the first threshold.

In this embodiment of this application, the quota of the first resource is dynamically adjusted in a running process of the container. To prevent the container from applying for a quota without limitation and consequently intensifying resource contention, an upper limit value of the quota of the first resource of the container may be set.

In some embodiments, the quota of the first resource of the first container needs to be less than or equal to the first preset value. The first preset value may be preset or default.

Optionally, the first preset value may be related to the initial quota of the first container. The first preset value of the first container is greater than or equal to the initial quota of the first container.

Optionally, the first preset value may be related to the load of the first resource of the node. That is, the first preset value varies with the load of the first resource.

In some embodiments, when a remaining available quota of the first resource of the first container is less than or equal to a third threshold, the quota of the first resource of the first container needs to be less than or equal to a second preset value. The remaining available quota of the first resource of the first container meets:

$$\text{remain} = \text{limit} \times (N+1) \times T - \text{used}$$

"remain" represents the remaining available quota of the first resource of the first container. "limit" represents the initial quota of the first container. T represents duration of the sampling cycle. N represents any positive integer. "used" represents the amount of the first resource used by the first container in N sampling cycles.

That is, the available quota of the first resource of the first container in N+1 sampling cycles is calculated by using the initial quota of the first container as the reference, and then the amount of the first resource used by the first container in the N past sampling cycles is subtracted, to obtain the remaining quota of the first resource of the first container, that is, the available first resource of the first container in the next sampling cycle.

Optionally, the second preset value is less than or equal to the first preset value.

Optionally, the second preset value is related to the remaining quota of the first resource, the third threshold, the initial quota, and the first preset value.

In some embodiments, the quota of the first resource of the first container needs to be always greater than or equal to the initial quota of the first container, to ensure that the service has the basic first resource available, thereby preventing service freezing and affecting user experience.

In this embodiment of this application, the quota of the first resource of the container may be adjusted by invoking a program or an interface. For example, files epu.cfs_period_us and cpu.cfs_quota_us provided by a cgroup file system are used to restrict use of the first resource by the container. Alternatively, an ebpf program is used to query and limit traffic of the container.

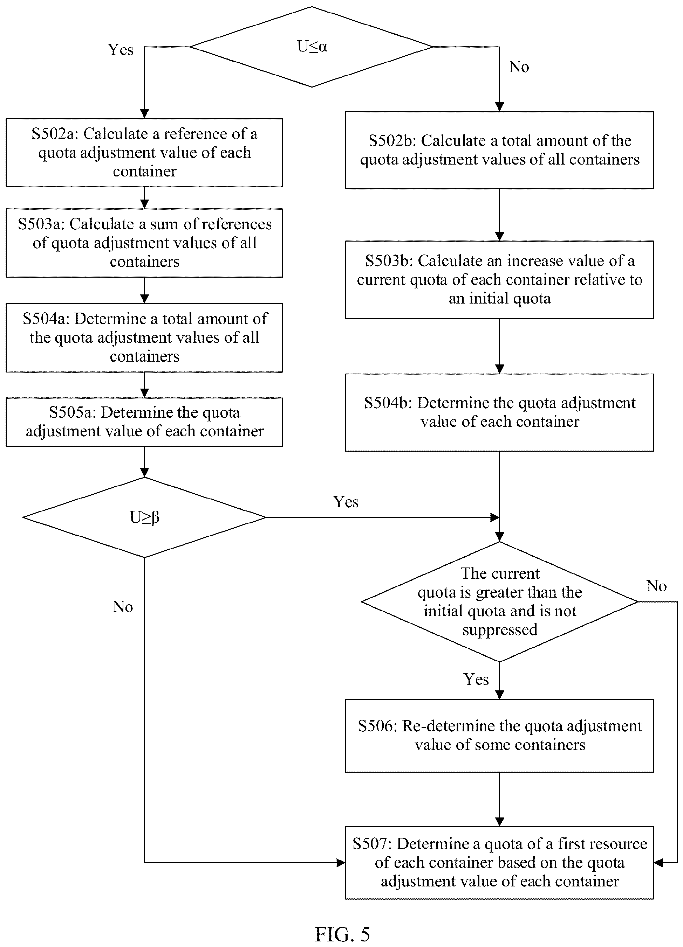

Refer to FIG. 5. The following describes a container resource adjustment method 500 according to an embodiment of this application. The method 500 includes the following steps.

S501: Initialize a resource quota adjustment value $\text{Delta}_i = 0$.

In this embodiment of this application, the quota adjustment value $\text{Delta}_i$ is a difference between a quota that needs to be adjusted and a current quota of the container i.

In this embodiment of this application, when load U of a first resource of a node is different, different resource adjustment policies are used.

In a possible implementation, when U is less than an alert threshold $\alpha$, the resource quota adjustment value of each container is determined by using the following steps.

S502a: Calculate a reference $delta_i = \theta_i/\partial_i$ of the quota adjustment value of each container.

S503a: Calculate a sum $\sum delta_i$ of references of quota adjustment values of all containers.

S504a: Determine a total amount $A = \min(\sum delta_i, R)$ of the quota adjustment values of all containers.

S505a: Determine the quota adjustment value $Delta_i \mathrel{+}= A \times (delta_i /\sum delta_i)$ of each container.

It should be understood that when the resource load U is less than the alert threshold $\alpha$, if a quantity of times $\partial_i$ that the container is restricted to using the first resource in a first time period is greater than zero, or duration $\theta_i$ in which the container is restricted to using the first resource in a first time period is greater than zero, it indicates that the container is restricted to using the first resource in the first time period, and a quota of the first resource of the container needs to be increased. The quota adjustment value of the container may be determined based on a ratio $\theta_i/\partial_i$.

It should be noted that the first time period may be a previous sampling cycle.

In some embodiments, in order to avoid an instantaneous and significant increase in the load of the first resource of the node, a second threshold R may be preset. The second threshold R is a maximum quota that can be increased at a time. Each time when the quota of the first resource of the container is adjusted, a total amount of the quota adjustment value of the container on the node is less than or equal to R.

In some embodiments, the second threshold R meets $R = \alpha - U$.

In some embodiments, the second threshold R is preset or is default. When $\alpha - U$ is greater than or equal to R, steps S502a to S505a are performed.

It should be understood that, in this embodiment, the quota adjustment value of the container may be corrected according to a proportion, so that the quota of the first resource of each container may be slowly increased, thereby avoiding the load of the first resource of the node to be excessively heavy, and ensuring quality of service of a service of the container.

When the load U of the first resource is less than or equal to the alert threshold $\alpha$, and the load U of the first resource is greater than or equal to a control threshold $\beta$, the following steps may be further performed.

S506: Re-determine the resource quota adjustment value of some containers:

$$Delta_i - = \left(quota_i - limit_i\right) \times 0.1 \times \frac{\left(\mathrm{U} - \beta\right)}{\alpha - \beta}$$

It should be noted that in steps S502a to S505a, for a container whose current quota $quota_i$ is greater than the initial quota $limit_i$ and whose $\theta_i$ or $\partial_i$ is zero, the quota adjustment value of the container is zero. When the load U of the first resource is greater than the control threshold $\beta$, for containers whose current quotas $quota_i$ are greater than the initial quota $limit_i$ and whose $\theta_i$ or $\partial_i$ is zero, the quotas of the first resources of these containers may be decreased, and the quota adjustment values of these containers are determined based on an increased quota of each container.

It should be understood that in the foregoing formula, $0.1 \times \frac{\left(\mathrm{U} - \beta\right)}{\alpha - \beta}$ represents a correction coefficient, and may be determined according to an actual requirement. This application is not limited thereto.

In a possible implementation, when the resource load U is greater than or equal to the alert threshold $\alpha$, the resource quota adjustment value of each container is determined by using the following steps.

S502b: Calculate a total amount $sub = U - \alpha$ of the quota adjustment value.

S503b: Calculate an increase value $inc_i = (quota_i - limit_i)$ of the current quota of each container relative to the initial quota.

S504b: Determine the quota adjustment value $Delta_i - = sub \times \left(\dfrac{inc_i}{\sum inc_i}\right)$ of each container.

It should be understood that when the resource load U is greater than or equal to the alert threshold $\alpha$, for a container whose current quota $quota_i$ is greater than the initial quota $limit_i$, the quota of the first resource of the container needs to be decreased. The quota adjustment value of the container is determined based on the increased quota.

Based on this, for the container whose current quota $quota_i$ is greater than the initial quota $limit_i$ and whose $\theta_i$ or $\partial_i$ is zero, the following steps may be further performed.

S506: Re-determine the quota adjustment value $Delta_i - = \left(quota_i - limit_i\right) \times 0.1 \times \dfrac{\left(\mathrm{U} - \beta\right)}{\alpha - \beta}$ of some containers.

It should be understood that for the container whose current quota $quota_i$ is greater than the initial quota $limit_i$ and whose $\theta_i$ or $\partial_i$ is zero, when the load U of the first resource is less than the alert threshold $\alpha$ and the load U of the first resource is greater than the control threshold, the quota adjustment value of this type of container meets

$$Delta_i = \left( quota_i - limit_i \right) \times 0.1 \times \frac{(U - \beta)}{\alpha - \beta}$$ . When the load U of the first resource is greater than or equal to the

alert threshold $\alpha$ , the quota adjustment value of this type of container is

$$Delta_i = sub \times \left( \frac{inc_i}{\sum inc_i} \right) + \left( quota_i - limit_i \right) \times 0.1 \times \frac{(U - \beta)}{\alpha - \beta}$$ .

That is, for a same container, when it is determined to decrease the quota of the first resource of the container, an amount by which the quota of the first resource of the container is decreased varies depending on the load of the first resource.

It should be further understood that when the quota of the first resource of the container is decreased, a decrease value of the quota of the first resource of the container is always related to the increased quota of the first resource of the container.

It should be noted that a symbol "+=" or "--=" represents addition or subtraction calculation performed based on a value obtained through previous calculation of $Delta_i$. For example, A$\pm$=B represents A=A+B or A=A-B.

S507: Determine the quota of the first resource of each container based on the quota adjustment value of each container.

Specifically, on a basis of the current quota of each container, the quota adjustment value $Delta_i$ is increased or decreased to obtain the quota of the first resource of each container. Then, the quota of the first resource of each container may be adjusted by invoking a program or an operation interface.

It should be noted that the alert threshold in this embodiment may be, for example, the first threshold in the embodiment shown in FIG. 4. For example, when the load of the first resource is less than the alert threshold, for a container ($\theta_i$ or $\partial_i$ is not zero) that is restricted to using the first resource in the previous sampling cycle, the quota of the first resource of the container is increased. When the load of the first resource is greater than or equal to the alert threshold, for a container whose current quota is greater than the initial quota, the quota of the first resource of the container is decreased.

It should be noted that the control threshold in this embodiment may be, for example, the first threshold in the embodiment shown in FIG. 4. For example, when the load of the first resource is greater than the control threshold, for a container whose current quota is greater than the initial quota and whose use of the first resource is not restricted in the previous sampling cycle, the quota of the first resource of the container is decreased.

In this embodiment of this application, each time when the quota of the first resource of the container is adjusted, the quota adjustment value $Delta_i$ of the quota of the first resource of the container may all be positive, or may all be negative, and the quota of the first resource of the container may be increased or decreased without limitation. Consequently, quality of service of the service may be affected. Therefore, for each container, an upper limit value or a lower limit value of the quota of the first resource of the container may be set, and the quota of the first resource of each container is controlled to be from the upper limit value to the lower limit value of the quota of the first resource of the container, to avoid excessively large fluctuation of the quota of the first resource of each container.

It should be noted that the quota of the first resource of each container on the node may be determined by using the embodiment shown in FIG. 5. For ease of description, the quota of the first resource determined by the first container by using the embodiment shown in FIG. 5 is denoted as a first quota.

Specifically, a value of the first quota is compared with the upper limit value, and a smaller value between the value of the first quota and the upper limit value is used as a second quota. Then, the quota of the first resource of the first container is adjusted to the second quota. In this way, the load of the node can be avoided to be excessively heavy, thereby avoiding impact on quality of service of the service of the container. A value of the first quota is compared with the lower limit value, and a larger value between the value of the first quota and the lower limit value is used as a second quota. Then, the quota of the first resource of the first container is adjusted to the second quota. In this way, it can be ensured that the quota of the container is not excessively small, thereby avoiding impact on quality of service of the service of the container.

Optionally, the lower limit value of the quota of the first resource of the first container may be the initial quota of the first resource of the first container, or may be any value.

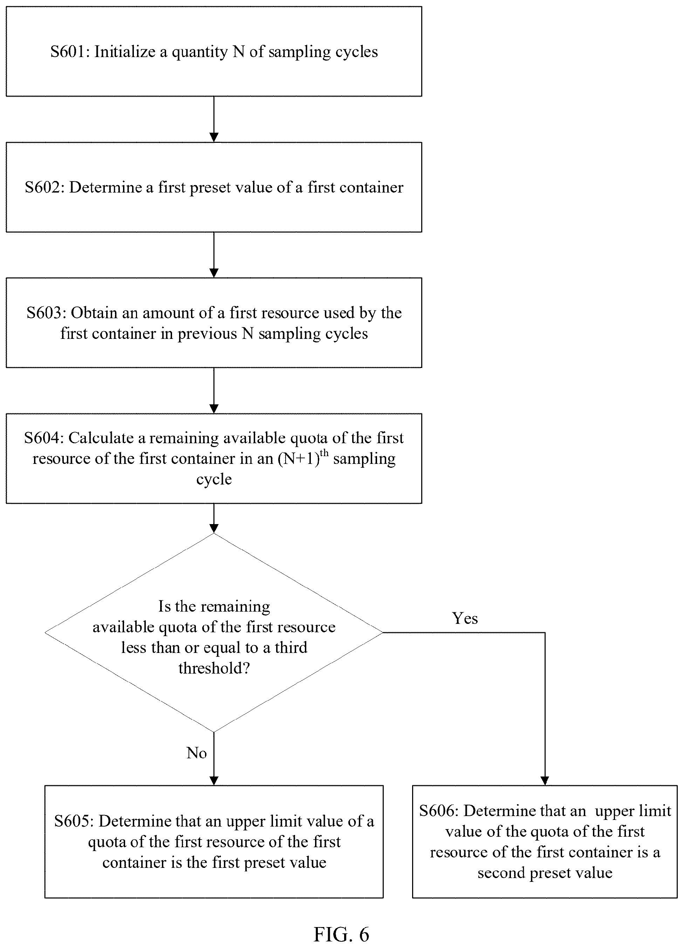

The following uses a first container as an example to describe how to determine an upper limit value of a quota of a first resource of the first container. FIG. 6 is a schematic flowchart of a container resource adjustment method according to an embodiment of this application. As shown in FIG. 6, the method includes the following steps.

S601: Initialize a quantity N of sampling cycles.

It should be understood that the quantity N of sampling cycles may be any positive integer, and duration of a sampling cycle may be the same as duration of a first time period.

S602: Determine a first preset value of the first container.

In this embodiment, the first preset value of each container may be related to an initial quota of the container. The first preset value of each container may be different.

Optionally, the first preset value may be any value greater than the initial quota of the first container.

S603: Obtain an amount, represented by "used", of the first resource used by the first container in previous N sampling cycles.

S604: Calculate a remaining available quota remain = limit $\times$(N + 1)$\times$T - used of the first resource of the first container in an (N+1)$^{th}$ sampling cycle.

It should be understood that the (N+1)$^{th}$ cycle represents a next sampling cycle. "remain" represents the remaining available quota of the first resource of the first container. "limit" represents the initial quota. T represents the duration of the sampling cycle. "used" represents the amount of the first resource used by the first container in the previous N sampling cycles.

S605: If the remaining available quota of the first resource is less than or equal to a third threshold K, it is determined that the upper limit value of the quota of the first resource of the first container is a second preset value Q.

The second preset value meets $Q = \mathrm{limit} + \left( \dfrac{\mathrm{remain}}{K} \right) \times \left( \mathrm{height} - \mathrm{limit} \right)$. Q represents the second preset value. K represents the third threshold. "height" represents the first preset value. "limit" represents a current quota of the first container.

Optionally, the third threshold may be preset or default.

Optionally, the third threshold may be related to the first preset value. For example, the third threshold is three times the first preset value, or the third threshold is any number that is greater than or equal to the first preset value.

S606: If the remaining available quota of the first resource is greater than or equal to the third threshold, it is determined that the upper limit value of the quota of the first resource of the first container is the first preset value.

In this embodiment of this application, the first preset value may be related to current load of the first resource of a node. For example, when the resource load is less than or equal to a control threshold, the first preset value is x times the initial quota. When the resource load is greater than the control threshold and less than an alert threshold, the first preset value is y times the initial quota. When the resource load is greater than or equal to the alert threshold, the first preset value is z times the initial quota. x, y, and z are all numbers that are greater than or equal to 1, and x$\geq$y$\geq$z.

In some embodiments, the first preset value may be a value that changes as the resource load of the node changes. For example, heavier resource load of the node indicates a smaller first preset value.

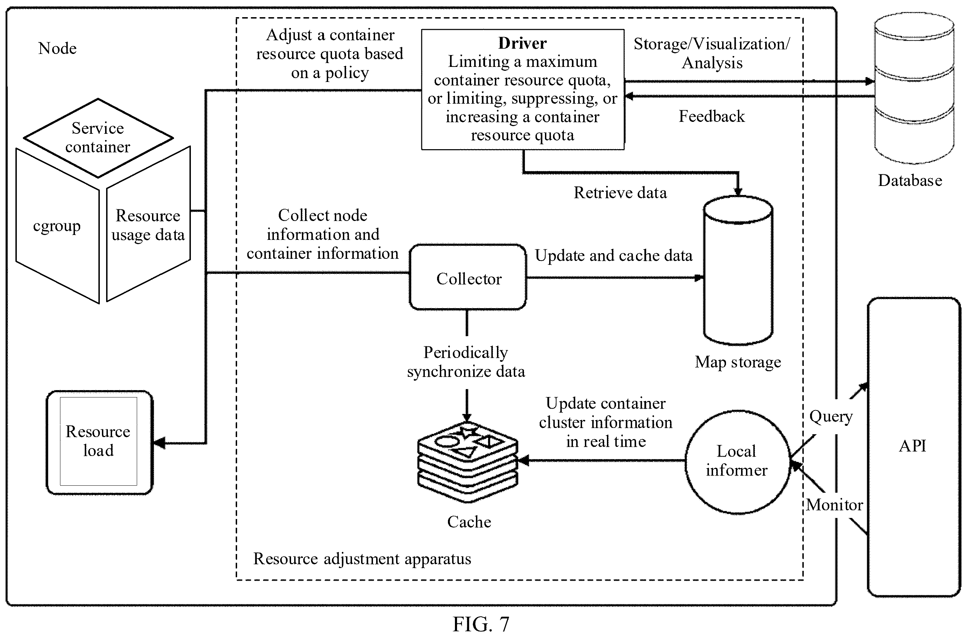

FIG. 7 shows an application scenario to which an embodiment of this application is applicable. Refer to FIG. 7. A container resource adjustment method provided in this embodiment of this application may be implemented by using program code deployed on server hardware, or may be implemented by using related software of a cloud native platform. An example in which the container resource adjustment method is implemented by using program code is used. The program code, for example, a resource adjustment apparatus shown in a dashed box in FIG. 7, may be run in a form of an independent container on each worker node in a container cluster. The resource adjustment apparatus may query and monitor container cluster information of an API server through a local informer (informer), and update the container cluster information to a cache in real time. A collector in the resource adjustment apparatus may collect node information and container information, periodically synchronize the container cluster information in the cache, and update and cache the foregoing information to a map storage. A driver in the resource adjustment apparatus may retrieve the foregoing information in the map storage, determine a container resource quota adjustment policy such as limiting a maximum container resource quota, or limiting, suppressing, or increasing a container resource quota, and adjust a resource quota of a service container through a cgroup, and write a result into a database.

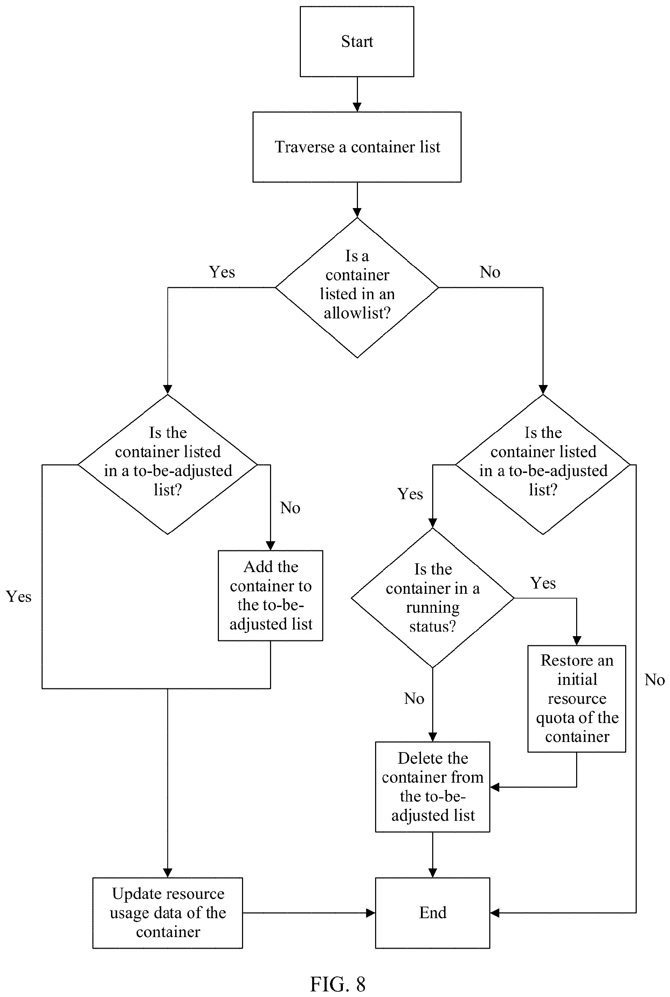

FIG. 8 is a diagram of data synchronization in an allowlist mechanism according to an embodiment of this application. Not all containers are real-time sensitive services (for example, an offline task such as deep learning model training does not have a high requirement on real-time performance). Therefore, the allowlist mechanism is set up to specify a container to be added to an allowlist through a mode of labeling by a user. A resource quota of the container added to the allowlist is dynamically adjusted by using a container resource adjustment method provided in this embodiment of this application. That is, for a container in the allowlist, resource usage data of the container needs to be obtained.

To prevent an untimely update of real-time data, a to-be-adjusted list corresponding to the allowlist usually further needs to be set. The allowlist is user-oriented, and the to-be-adjusted list is machine-oriented. The allowlist needs to be consistent with the to-be-adjusted list. Refer to FIG. 8. For each container in a container list, whether the container is listed in the allowlist is first determined. If the container is not listed in the allowlist but has been added to the to-be-adjusted list, the container in the to-be-adjusted list needs to be deleted. In this case, if the container is in a running status, the resource quota of the container needs to be restored to an initial quota, and then the container in the to-be-adjusted list is deleted. If the container is not listed in the allowlist and is not added to the to-be-adjusted list, data synchronization does not need to be performed. If the container is listed in the allowlist and has been added to the to-be-adjusted list, the resource usage data of the container is updated. If the container is listed in the allowlist but is not added to the to-be-adjusted list, the container is added to the to-be-adjusted list, and the resource usage data of the container is updated. The resource usage data of the container includes but is not limited to the initial quota and a current quota of the container, the container list, the running status of the container, throttling information of the container, and an amount of a resource used by the container.

In this embodiment of this application, the resource usage data of the container may be obtained in the following manner.

  (1) Obtain and parse the initial quota, the container list, and the running status of the container from an API server.
  (2) Read the current quota of the container from cgroup files cpu.cfs_quota_us and cpu.cfs_period us of the container.
  (3) Read two parameters nr_throttled and throttled_time from a cgroup file cpu.stat of the container. nr_throttled records a quantity of times that the container has been restricted to using a CPU resource since startup of the container, that is, a quantity in cpu.cfs_period_us. throttled_time records duration in which the container has been restricted to using the CPU resource since startup of the container. A difference between values of nr_throttled at an interval of one sampling cycle is calculated, to obtain the quantity of times $\partial_i$ that the container is restricted to using the CPU resource in a previous sampling cycle. A difference between values of throttled_time at an interval of one sampling cycle is calculated, to obtain the duration $\theta_i$ in which the container is restricted to using the CPU resource in the previous sampling cycle. The throttling information may include the quantity of times $\partial_i$ that use of the CPU resource is restricted and the duration $\theta_i$ in which use of the CPU resource is restricted.
  (4) Obtain, from a cgroup file cpuacct.usage of the container, a total amount of the resource used by the container since startup of the container.

Optionally, in this embodiment of this application, the allowlist and the to-be-adjusted list may not be set. Instead, data synchronization is directly performed on each container on a node and the resource quota of the container is dynamically adjusted.

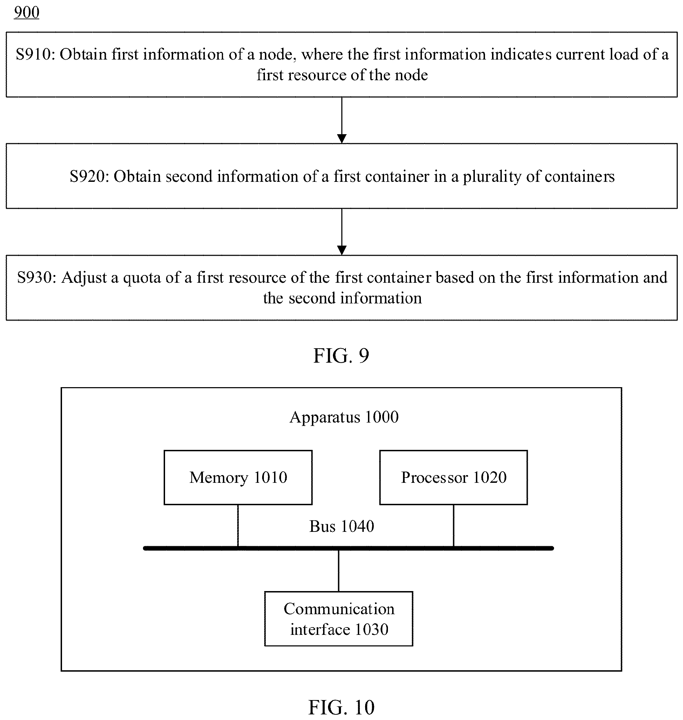

FIG. 9 shows a container resource adjustment method 900 according to an embodiment of this application. The method 900 includes the following steps.

S910: Obtain first information of a node, where the first information indicates current load of a first resource of the node.

S920: Obtain second information of a first container in a plurality of containers, where the second information indicates usage of the first resource by the first container in a first time period.

S930: Adjust a quota of the first resource of the first container based on the first information and the second information.

It should be noted that the node may be any node of the n worker nodes in the embodiment shown in FIG. 3, and the first container is any container on the node. The first resource of the node is a compressible resource, for example, may be a CPU resource or a network (bandwidth) resource. A plurality of containers may be configured for the node to run different services. Each container may use a part of the first resource of the node, to ensure normal running of the services.

It should be further noted that the current load of the first resource refers to usage of the first resource of the node at a current moment. For example, when the first resource is a CPU resource, at the current moment, CPU resource utilization (or CPU load) of the node is 70%. The current moment is a moment at which the quota of the first resource of the first container is adjusted, and is usually a moment at which the first time period ends.

It should be further noted that the first time period may be one or more sampling cycles.

It should be understood that the second information may be the resource usage data of the first container described above.

Optionally, the second information may include a current quota, an initial quota, and throttling information of the first container. The current quota is a current quota of the first resource of the first container. The initial quota is a preset or default quota of the first resource of the first container. The throttling information may indicate whether the first container is restricted to using the first resource in the first time period.

In some embodiments, the throttling information may indicate a degree to which the first container is restricted to using the first resource in the first time period. If the degree is zero, it indicates that the first container is not restricted to using the first resource in the first time period. If the degree is not zero, it indicates that the first container is restricted to using the first resource in the first time period.

In this embodiment of this application, as the container runs, the load of the first resource of the node also changes in real time. For the plurality of containers that run on the node, the usage of the first resource by each container is also different. To properly control an available first resource of each container, adjustment needs to be performed with reference to the load of the first resource of the node and the usage of the first resource by each container.

Specifically, a type of the first container may be determined based on the second information of the first container. The quota of the first resource of the first container is adjusted based on the first information, the second information, and the type of the first container.

For example, if the first container is restricted to using the first resource in the first time period, the first container belongs to a first-type container. If the current quota of the first container is greater than the initial quota of the first container, the first container belongs to a second-type container.

In this embodiment of this application, a user may preset a first threshold. The load of the first resource of the node is compared with the first threshold, to determine a supply-demand relationship of the first resource of a current node. If the load of the first resource is less than the first threshold, it indicates that the first resource of the node is surplus, and more first resources may be allocated to the container. For example, the quota of the first resource of the first-type container may be increased. If the load of the first resource is greater than the first threshold, it indicates that the load of the first resource of the node is heavy. For example, the quota of the first resource of the second-type container may be decreased, to reduce the load of the first resource of the node.

It should be noted that the first threshold herein may be the first threshold in the embodiment shown in FIG. 4, or may be the control threshold or the alert threshold in the embodiment shown in FIG. 5. To be specific, when the current load of the first resource of the node is greater than the control threshold, quotas of first resources of some containers (containers whose current quotas are greater than the initial quota, or containers whose current quotas are greater than the initial quota and that are restricted to using the first resource in the first time period) are decreased. When the current load of the first resource of the node is less than the alert threshold, quotas of the first resources of some containers (containers that are restricted to using the first resource in the first time period) are increased.

It should be noted that because the usage of the first resource by each container is different, an increase value or a decrease value of the quota of the first resource by each container is also different. The first container is used as an example for description. When it is determined that the quota of the first resource of the first container needs to be increased, the increase value of the quota of the first resource of the first container is related to the degree to which the first container is restricted to using the first resource in the first time period. For example, a larger degree to which the first container is restricted to using the first resource in the first time period indicates a larger increase value of the quota of the first resource of the first container. When it is determined that the quota of the first resource of the first container needs to be decreased, the decrease value of the quota of the first resource of the first container is related to a difference between the current quota of the first container and the initial quota of the first container. For example, a larger difference indicates a larger decrease value of the quota of the first resource of the first container.

In some embodiments, the throttling information includes duration in which and a quantity of times that the first container is restricted to using the first resource in the first time period. The increase value of the quota of the first resource of the first container is related to a ratio of the duration to the quantity of times.

In some embodiments, the first-type container may include a plurality of containers. When the load of the first resource is less than the first threshold, a sum of increase values of the plurality of containers in the first-type container needs to be less than or equal to a second threshold. A sum of the second threshold and the load of the first resource needs to be less than or equal to the first threshold. In this way, the load of the first resource of the node can be avoided to be instantaneously excessively heavy.

In some embodiments, the quota of the first resource of the first container in a second time period needs to be greater than or equal to the initial quota of the first container. In this way, each time after adjustment ends, the available first resource of the container is not excessively small, thereby avoiding service running freezing, and improving user experience.

In some embodiments, the quota of the first resource of the first container needs to be less than or equal to the first preset value. The first preset value of the first container needs to be greater than or equal to the initial quota of the first container. In this way, the available first resource of the container can be prevented from being increased without limitation.

Optionally, the first preset value may be preset by the user or may be default.

Optionally, the first preset value is related to the initial quota of the first container. Optionally, the first preset value is related to the load of the first resource of the node.

In some embodiments, when a remaining quota of a first resource of the first container is less than a third threshold, the quota of the first resource of the first container needs to be less than or equal to a second preset value. The second preset value is less than or equal to the first preset value. The remaining quota of the first resource of the first container meets:

$$\text{remain} = \text{limit} \times (N+1) \times T - \text{used}$$

"remain" represents the remaining quota of the first resource. "limit" represents the initial quota of the first container. N represents any positive integer. T represents duration of the sampling cycle (first time period). "used" represents an amount of the first resource used by the first container in N first time periods.

Optionally, the second preset value may be preset by the user or may be default.

Optionally, the second preset value is related to the remaining quota of the first resource, the third threshold, the initial quota, and the first preset value.

FIG. 10 is a diagram of a hardware structure of an apparatus 1000 according to an embodiment of this application. The apparatus 1000 (the apparatus 1000 may be specifically an electronic device) shown in FIG. 10 includes a memory 1010, a processor 1020, a communication interface 1030, and a bus 1040. The memory 1010, the processor 1020, and the communication interface 1030 implement mutual communication connections through the bus 1040.

The memory 1010 may be a ROM, a static storage device, a dynamic storage device, or a RAM. The memory 1010 may store a program. When the program stored in the memory 1010 is executed by the processor 1020, the processor 1020 is configured to perform the steps of the container resource adjustment method in embodiments of this application.

The processor 1020 may be a general-purpose CPU, a microprocessor, an ASIC, a GPU, or one or more integrated circuits, and is configured to execute a related program, to implement functions that need to be performed by units in the apparatus 1000 in embodiments of this application, or perform the container resource adjustment method in method embodiments of this application.

The processor 1020 may alternatively be an integrated circuit chip and has a signal processing capability. In an implementation process, steps of the container resource adjustment method in this application may be implemented by using a hardware integrated logic circuit in the processor 1020, or by using instructions in a form of software. The processor 1020 may alternatively be a general-purpose processor, a DSP, an ASIC, an FPGA or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed through a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1010. The processor 1020 reads information in the memory 1010, and completes, in combination with hardware of the processor 1020, functions that need to be performed by the units included in the apparatus 1000 in embodiments of this application, or performs the container resource adjustment method in the method embodiments of this application.

The communication interface 1030 implements communication between the apparatus 1000 and another device or a communication network by using a transceiver apparatus, for example, a transceiver.

The bus 1040 may include a path for information transfer between various components (for example, the memory 1010, the processor 1020, and the communication interface 1030) of the apparatus 1000.

It should be noted that although only the memory, the processor, and the communication interface are shown in the apparatus 1000 shown in FIG. 10, in a specific implementation process, a person skilled in the art should understand that the apparatus 1000 further includes another device necessary for implementing normal running. In addition, based on a specific requirement, a person skilled in the art should understand that the apparatus 1000 may further include a hardware device for implementing another additional function. In addition, a person skilled in the art should understand that the apparatus 1000 may alternatively include only devices required for implementing embodiments of this application, but does not necessarily include all devices shown in FIG. 10.

An embodiment of this application further provides a chip. The chip includes a processor and a communication interface. The communication interface is configured to receive a signal and transmit the signal to the processor. The processor processes the signal, so that the container resource adjustment method according to any one of the foregoing possible implementations is performed.

An embodiment further provides a computer-readable storage medium. The computer-readable storage medium stores computer instructions. When the computer instructions are run on a computer, the container resource adjustment method in the foregoing embodiment is performed.

An embodiment further provides a computer program product. When the computer program product runs on a computer, the computer is enabled to perform the foregoing related steps, so that the container resource adjustment method in the foregoing embodiments is performed.

The foregoing embodiments may be used separately, or may be used in combination to achieve different technical effects.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. In actual implementation, there may be another division manner.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. Indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A container resource adjustment method, wherein the method comprises:

   obtaining first information of a node, wherein the first information indicates current load of a first resource of the node, and a plurality of containers are configured for the node;
   obtaining second information of a first container in the plurality of containers, wherein the second information indicates usage of the first resource by the first container in a first time period; and
   adjusting a quota of a first resource of the first container based on the first information and the second information.

2. The method according to claim 1, wherein the adjusting a quota of a first resource of the first container based on the first information and the second information comprises:

   determining a type of the first container based on the second information; and
   adjusting the quota of the first resource of the first container based on the first information, the second information, and the type of the first container.

3. The method according to claim 2, wherein the second information comprises a current quota, an initial quota, and throttling information of the first container, the current quota is a current quota of the first resource of the first container, the initial quota is a preset or default quota of the first resource of the first container, and the throttling information indicates whether the first container is restricted to using the first resource in the first time period; and
   the determining a type of the first container based on the second information comprises:

   if the first container is restricted to using the first resource in the first time period, the first container belongs to a first-type container; and
if the current quota is greater than the initial quota, the first container belongs to a second-type container.

4. The method according to claim 3, wherein the adjusting the quota of the first resource of the first container based on the first information, the second information, and the type of the first container comprises:

when load of the first resource is less than a first threshold, and the first container belongs to the first-type container, increasing the quota of the first resource of the first container based on the second information; and
when the load of the first resource is greater than or equal to the first threshold, and the first container belongs to the second-type container, decreasing the quota of the first resource of the first container based on the second information.

5. The method according to claim 4, wherein the throttling information comprises duration in which and a quantity of times that the first container is restricted to using the first resource in the first time period; and
an increase value of the quota of the first resource of the first container is related to a ratio of the duration to the quantity of times.

6. The method according to claim 4 or 5, wherein a decrease value of the quota of the first resource of the first container is related to a difference between the current quota and the initial quota.

7. The method according to any one of claims 4 to 6, wherein when the load of the first resource is less than the first threshold, and the first container belongs to the first-type container, there is one or more first containers, a sum of an increase value of a quota of a first resource of the one or more first containers is less than or equal to a second threshold, and a sum of the second threshold and the load of the first resource is less than or equal to the first threshold.

8. The method according to any one of claims 1 to 7, wherein the quota of the first resource of the first container is greater than or equal to the initial quota.

9. The method according to any one of claims 1 to 8, wherein the quota of the first resource of the first container is less than or equal to a first preset value, and the first preset value is greater than or equal to the initial quota.

10. The method according to claim 9, wherein when a remaining available quota of the first resource of the first container is less than a third threshold, the quota of the first resource of the first container is less than or equal to a second preset value, and the second preset value is less than or equal to the first preset value; and
the remaining available quota of the first resource of the first container meets:

$$remain = limit \times (N+1) \times T - used ,$$

wherein
"remain" represents the remaining available quota of the first resource, "limit" represents the initial quota, N represents any positive integer, T represents duration of the first time period, and "used" represents an amount of the first resource used by the first container in N first time periods.

11. The method according to claim 10, wherein the second preset value is related to the remaining quota of the first resource, the third threshold, the initial quota, and the first preset value.

12. The method according to any one of claims 9 to 11, wherein the first preset value is related to the load of the first resource.

13. An electronic device, wherein the electronic device comprises:

one or more processors; and
one or more memories, wherein
the one or more memories store one or more computer programs, the one or more computer programs comprise instructions, and when the instructions are executed by the one or more processors, the electronic device is enabled to perform the following steps:

obtaining first information of a node, wherein the first information indicates current load of a first resource of the node, and a plurality of containers are configured for the node;

obtaining second information of a first container in the plurality of containers, wherein the second information indicates usage of the first resource by the first container in a first time period; and

adjusting a quota of a first resource of the first container based on the first information and the second information.

14. The electronic device according to claim 13, wherein when the instructions are executed by the one or more processors, the electronic device is enabled to perform the following steps:

determining a type of the first container based on the second information; and

adjusting the quota of the first resource of the first container based on the first information, the second information, and the type of the first container.

15. The electronic device according to claim 14, wherein the second information comprises a current quota, an initial quota, and throttling information of the first container, the current quota is a current quota of the first resource of the first container, the initial quota is a preset or default quota of the first resource of the first container, and the throttling information indicates whether the first container is restricted to using the first resource in the first time period; and when the instructions are executed by the one or more processors, the electronic device is enabled to perform the following steps:

if the first container is restricted to using the first resource in the first time period, the first container belongs to a first-type container; and

if the current quota is greater than the initial quota, the first container belongs to a second-type container.

16. The electronic device according to claim 15, wherein when the instructions are executed by the one or more processors, the electronic device is enabled to perform the following steps:

when load of the first resource is less than a first threshold, and the first container belongs to the first-type container, increasing the quota of the first resource of the first container based on the second information; and

when the load of the first resource is greater than or equal to the first threshold, and the first container belongs to the second-type container, decreasing the quota of the first resource of the first container based on the second information.

17. The electronic device according to claim 16, wherein the throttling information comprises duration in which and a quantity of times that the first container is restricted to using the first resource in the first time period, and an increase value of the quota of the first resource of the first container is related to a ratio of the duration to the quantity of times.

18. The electronic device according to claim 16 or 17, wherein a decrease value of the quota of the first resource of the first container is related to a difference between the current quota and the initial quota.

19. The electronic device according to any one of claims 16 to 18, wherein when the load of the first resource is less than the first threshold, and the first container belongs to the first-type container, there is one or more first containers, a sum of an increase value of a quota of a first resource of the one or more first containers is less than or equal to a second threshold, and a sum of the second threshold and the load of the first resource is less than or equal to the first threshold.

20. The electronic device according to any one of claims 13 to 19, wherein the quota of the first resource of the first container is greater than or equal to the initial quota.

21. The electronic device according to any one of claims 13 to 20, wherein the quota of the first resource of the first container is less than or equal to a first preset value, and the first preset value is greater than or equal to the initial quota.

22. The electronic device according to claim 21, wherein when a remaining available quota of the first resource of the first container is less than a third threshold, the quota of the first resource of the first container is less than or equal to a second preset value, and the second preset value is less than or equal to the first preset value; and

the remaining available quota of the first resource of the first container meets:

$$remain = limit \times (N+1) \times T - used,$$

wherein

"remain" represents the remaining available quota of the first resource, "limit" represents the initial quota, N represents any positive integer, T represents duration of the first time period, and "used" represents an amount of the first resource used by the first container in N first time periods.

23. The electronic device according to claim 22, wherein the second preset value is related to the remaining quota of the first resource, the third threshold, the initial quota, and the first preset value.

24. The electronic device according to any one of claims 21 to 23, wherein the first preset value is related to the load of the first resource.

Electronic device 100

Antenna 1

Antenna 2

Mobile communication module
2G/3G/4G/5G
[150]

Wireless communication module
BT/WLAN/GNSS/NFC/IR/FM
[160]

Speaker
[170A]

Receiver
[170B]

Audio
module
[170]

Microphone
[170C]

Headset jack
[170D]

Displays 1 to N 194

Cameras 1 to N 193

Indicator [192]

Motor [191]

Button [190]

Internal memory [121]

SIM card interfaces 1
to N [195]

External memory
interface [120]

USB interface [130]

Charging
input

Charging
management
module
[140]

Power
management
module [141]

Battery [142]

Processor
[110]

Sensor module [180]

Pressure sensor
[180A]

Gyro sensor [180B]

Barometric pressure
sensor [180C]

Magnetic sensor
[180D]

Acceleration sensor
[180E]

Distance sensor
[180F]

Optical proximity
sensor [180G]

Fingerprint sensor
[180H]

Temperature sensor
[180J]

Touch sensor
[180K]

Ambient light sensor
[180L]

Bone conduction
sensor [180M]

FIG. 1

| Application layer | Camera | Calendar | Map | WLAN | Music | Messaging |
| | Gallery | Call | Navigation | Bluetooth | Video | ... |

| Application framework layer | Window manager | Content provider | Telephone manager | Resource manager |
| | Notification manager | View system | ... | |

| System library | Surface manager | Three-dimensional graphics processing library | Android runtime |
| | Two-dimensional graphics engine | Media library | Image processing library | ... |

| Kernel layer | Display driver | Camera driver |
| | Audio driver | Sensor driver | ... |

FIG. 2

FIG. 3

400

| S401: Initialize a fixed parameter |

| S402: Initialize an optional parameter of a user |

| S403: Obtain load of a first resource of a node and resource usage data of a first container |

| S404: Adjust a quota of a first resource of the first container based on the load of the first resource and the resource usage data of the first container |

FIG. 4

U≤α

Yes — No

**S502a:** Calculate a reference of a quota adjustment value of each container

**S502b:** Calculate a total amount of the quota adjustment values of all containers

**S503a:** Calculate a sum of references of quota adjustment values of all containers

**S503b:** Calculate an increase value of a current quota of each container relative to an initial quota

**S504a:** Determine a total amount of the quota adjustment values of all containers

**S504b:** Determine the quota adjustment value of each container

**S505a:** Determine the quota adjustment value of each container

U≥β

Yes

No

The current quota is greater than the initial quota and is not suppressed

No

Yes

**S506:** Re-determine the quota adjustment value of some containers

**S507:** Determine a quota of a first resource of each container based on the quota adjustment value of each container

FIG. 5

S601: Initialize a quantity N of sampling cycles

S602: Determine a first preset value of a first container

S603: Obtain an amount of a first resource used by the first container in previous N sampling cycles

S604: Calculate a remaining available quota of the first resource of the first container in an $(N+1)^{th}$ sampling cycle

Is the remaining available quota of the first resource less than or equal to a third threshold?

Yes

No

S605: Determine that an upper limit value of a quota of the first resource of the first container is the first preset value

S606: Determine that an upper limit value of the quota of the first resource of the first container is a second preset value

FIG. 6

FIG. 7

EP 4 647 906 A1

FIG. 8

900

S910: Obtain first information of a node, where the first information indicates current load of a first resource of the node

S920: Obtain second information of a first container in a plurality of containers

S930: Adjust a quota of a first resource of the first container based on the first information and the second information

FIG. 9

Apparatus 1000

Memory 1010

Processor 1020

Bus 1040

Communication interface 1030

FIG. 10

## INTERNATIONAL SEARCH REPORT

| International application No. |
|---|
| **PCT/CN2023/133239** |

### A. CLASSIFICATION OF SUBJECT MATTER

G06F9/455(2018.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 容器, 资源, 分配, 调整, 负载, 配额, 使用, 限制, 类别, container, resource, allocation, adjustment, load, quota, usage, limit, category

### C. DOCUMENTS CONSIDERED TO BE RELEVANT

| Category* | Citation of document, with indication, where appropriate, of the relevant passages | Relevant to claim No. |
|---|---|---|
| Y | CN 111858030 A (BEIJING BAIDU NETCOM SCIENCE AND TECHNOLOGY CO., LTD.) 30 October 2020 (2020-10-30) description, paragraphs [0002]-[0023], and figure 1, abstract | 1-24 |
| Y | CN 108415772 A (TENCENT TECHNOLOGY (SHENZHEN) CO., LTD.) 17 August 2018 (2018-08-17) description, paragraphs [0006]-[0044], and abstract | 1-24 |
| A | CN 110597623 A (PING AN PUHUI ENTERPRISE MANAGEMENT CO., LTD.) 20 December 2019 (2019-12-20) entire document | 1-24 |
| A | CN 112162827 A (TENCENT TECHNOLOGY (SHENZHEN) CO., LTD.) 01 January 2021 (2021-01-01) entire document | 1-24 |
| A | US 2019384515 A1 (EMC IP HOLDING CO., LLC.) 19 December 2019 (2019-12-19) entire document | 1-24 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 January 2024** | **23 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/133239**

| Patent document cited in search report | | | Publication date (day/month/year) | Patent family member(s) | | | Publication date (day/month/year) |
|---|---|---|---|---|---|---|---|
| CN | 111858030 | A | 30 October 2020 | None | | | |
| CN | 108415772 | A | 17 August 2018 | None | | | |
| CN | 110597623 | A | 20 December 2019 | None | | | |
| CN | 112162827 | A | 01 January 2021 | None | | | |
| US | 2019384515 | A1 | 19 December 2019 | CN | 110609743 | A | 24 December 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310078920